# EUROPÄISCHE PATENTSCHRIFT

(11) **EP 3 507 060 B1**
(45) Veröffentlichungstag und Bekanntmachung des Hinweises auf die Patenterteilung: **19.10.2022**
(21) Anmeldenummer: 17762043.2
(22) Anmeldetag: 30.08.2017
(51) Int. Cl.: B23Q 3/12, B23B 29/32, B23Q 5/20

(54) **KUPPLUNGSVORRICHTUNG**
COUPLING DEVICE
DISPOSITIF D'ACCOUPLEMENT

(30) Priorität: 03.09.2016 DE 102016010700
(43) Veröffentlichungstag der Anmeldung: 10.07.2019
(73) Patentinhaber: Zeitfracht GmbH & Co. KGaA, 13627 Berlin (DE)
(72) Erfinder: GIESLER, Steffen, 72458 Albstadt (DE); STROBEL, Andrea, 72766 Reutlingen (DE)
(74) Vertreter: Bartels und Partner, Patentanwälte
(86) Internationale Anmeldenummer: PCT/EP2017/001039
(87) Internationale Veröffentlichungsnummer: WO 2018/041405

(56) Entgegenhaltungen:
- EP-A1- 0 585 600
- WO-A1-2011/035866
- CN-A- 101 537 503

## Beschreibung

Die Erfindung betrifft einen Werkzeugrevolver mit den Merkmalen im Oberbegriff von Anspruch 1.

Durch die DE 10 2009 042 772 A1 ist eine Antriebsvorrichtung für den wahlweisen Antrieb einer Werkzeugscheibe eines Werkzeugrevolvers und mindestens eines Bearbeitungswerkzeuges bekannt, das mittels einer Werkzeugaufnahme an der Werkzeugescheibe festlegbar ist, mittels zweier Antriebsmittel, die von einer gemeinsamen, eine Antriebswelle aufweisenden Antriebseinrichtung antreibbar sind, wobei die Antriebsmittel über eine jeweils von mindestens einer Betätigungseinrichtung ansteuerbaren Kupplungseinrichtung mit Antriebsmitteln verbindbar sind, die dem Antrieb der Werkzeugscheibe oder des Bearbeitungswerkzeuges dienen und wobei zumindest die Antriebseinrichtung zusammen mit den Antriebsmitteln innerhalb der Werkzeugscheibe angeordnet sind.

Bei der bekannten Kupplungsvorrichtung gelangt mithin in einer Betriebsart die Antriebswelle der Antriebseinheit des Werkzeugrevolvers in einer Kupplungsstellung mit ihrer Innenverzahnung in Eingriff mit einer Außenverzahnung der Abtriebswelle der Abtriebseinheit der Werkzeugaufnahme für den drehenden Antrieb eines dahingehend aufgenommenen spanenden Bearbeitungswerkzeuges. Ist die Bearbeitung mit diesem Bearbeitungswerkzeug abgeschlossen, wird die Kupplungsvorrichtung gelöst, indem die angesprochenen Verzahnungen wieder außer Eingriff miteinander gebracht werden und durch Drehen oder Schwenken der Werkzeugscheibe gegenüber der stationär angeordneten Antriebseinheit des Werkzeugrevolvers kann eine neue Werkzeugaufnahme mit ihrem Werkzeug, die an der Werkzeugscheibe außenumfangsseitig angeordnet ist, in die Bearbeitungsstellung gewechselt werden, für die die Kupplungsvorrichtung dann erneut die angesprochenen Verzahnungen von Antriebswelle und Abtriebswelle in Eingriff miteinander bringt.

Für einen dahingehend kollisionsfreien Kupplungsvorgang müssen die angesprochenen Verzahnungen derart genau aufeinander ausgerichtet sein, dass die Zähne der einen Verzahnung, wie der Außenverzahnung der Abtriebswelle, weitgehend spielfrei in Eingriff bringbar sind, zwischen die Zahnzwischenräume der anderen Verzahnung, hier in Form der Innenverzahnung der Antriebswelle. Um dies sicherzustellen werden sogenannte Verdrehsicherungen eingesetzt, die fachsprachlich auch mit Indixiereinrichtungen bezeichnet sind.

Eine solche Verdrehsicherung ist in der DE 42 28 946 A1 für einen Spindelkopf für Werkzeugrevolver offenbart, in dem drehbar eine Spindel gelagert, auf der längsverschiebbar, aber unverdrehbar eine Buchse angeordnet ist, an der ein Sicherungselement vorgesehen ist, das für eine Verdrehsicherung in seiner wirksamen Stellung, in welcher der axiale Verschiebebereich der Buchse in der einen Richtung formschlüssig begrenzt ist, in Eingriff mit einem Sicherungselement des Gehäuses steht und durch eine axiale Verschiebung der Buchse entgegen der Kraft einer vorgespannten Feder außer Eingriff mit dem Sicherungselement des Gehäuses bringbar ist, wobei von den in der wirksamen Stellung der Sicherungselemente zusammenwirkenden Flächen wenigstens diejenige des einen Sicherungselementes gegenüber der axialen Richtung in einem eine Selbsthemmung ausschließenden Maße geneigt ist. Dergestalt kann das Drehmoment, das über die Sicherungselemente übertragen werden kann, auf einen Wert begrenzt werden, der eine Beschädigung oder ein Zerstören ausschließt. Ferner wird ohne eine besondere Präzision sichergestellt, dass das an der Spindel vorgesehene Kupplungsprofil genau auf das Profil des Kupplungsgegenstückes ausgerichtet werden kann, so dass es beim Kuppeln nicht zu Kollisionen zwischen den Profilen regelmäßig in Form von Verzahnungsprofilen kommen kann. Eine solche oder eine vergleichbare Verdrehsicherung ist regelmäßig auf dem Außenumfang der Abtriebswelle der Abtriebseinheit einer jeden bekannten Werkzeugaufnahme angebracht.

Obwohl sich diese bekannten Kupplungsvorrichtungen nebst Verdrehsicherungen in der Praxis bestens bewährt haben, kann es zu Problemen kommen, sofern man höhere Bearbeitungsmomente mit der Antriebseinheit des Werkzeugrevolvers übertragen möchte, da das maximal übertragbare Moment regelmäßig durch die Festigkeit der angesprochenen Welle-Nabe-Verbindungen in Form der in Eingriff miteinander befindlichen Verzahnungen begrenzt ist und insoweit konstruktionsbedingt zwangsläufig relativ niedrig ausfällt.

Die CN 101 537 503 offenbart einen Werkzeugrevolver mit einer Antriebseinheit, einer eine Abtriebseinheit aufweisenden Werkzeugaufnahme und einer Kupplungsvorrichtung zum wieder lösbaren Herstellen einer Antriebsverbindung zwischen der Antriebseinheit des Werkzeugrevolvers und der Abtriebseinheit der an dem Werkzeugrevolver angebrachten Werkzeugaufnahme, in der ein Bearbeitungswerkzeug aufnehmbar ist, wobei eine Antriebswelle der Antriebseinheit in einer Kupplungsstellung mit ihrer Außenverzahnung in Eingriff mit einer Innenverzahnung einer Abtriebswelle der Abtriebseinheit ist.

Die WO 2011/035866 A1 und die EP 585 600 A1 beschreiben Teile von Kupplungsvorrichtungen für Werkzeugrevolver.

Ausgehend von diesem Stand der Technik liegt der Erfindung die Aufgabe zugrunde, die bekannten Werkzeugrevolver dahingehend weiter zu verbessern, dass man Welle-Nabe-Verbindungen der Kupplungsvorrichtung schafft, die die Übertragung höherer Bearbeitungsmomente zulassen, insbesondere bei Einsatz von leistungsstärkeren Direktantrieben als Antriebseinheiten.

Eine dahingehende Aufgabe löst ein Werkzeugrevolver mit den Merkmalen des Patentanspruches 1 in seiner Gesamtheit.

Gemäß dem Kennzeichen des Anspruchs 1 zeichnet sich der erfindungsgemäße Werkzeugrevolver dadurch aus, dass für eine kollisionsfreie Ausrichtung von Außen- zu Innenverzahnung vor dem Kuppeln eine Ausrichteinrichtung dient, die Teile der Abtriebswelle durchgreift und auf einer Seite für das Zusammenwirken mit der Antriebswelle ein Steuermittel und auf der anderen Seite ein von dem Steuermittel ansteuerbares Ausrichtmittel aufweist, das an der Werkzeugaufnahme festlegbar ist.

Dadurch, dass eine Antriebswelle der Antriebseinheit in einer Kupplungsstellung mit ihrer Außenverzahnung in Eingriff ist mit einer Innenverzahnung einer Abtriebswelle der Abtriebseinheit, lassen sich aufgrund der damit erzielbaren, konstruktionsbedingt größeren Durchmesser der WellenNaben-Paarung von Außen- und Innenverzahnung auch höhere Drehmomente und mithin Bearbeitungsmomente auf das in der Werkzeugaufnahme aufgenommene spanende Bearbeitungswerkzeug übertragen, was mit den bisherigen genannten Verzahnungslösungen, die mit ihren Verzahnungen auf einem jeweils kleineren Durchmesser für die Bearbeitung in Eingriff miteinander sind, nicht zu realisieren ist.

Damit die Antriebswelle der Außenverzahnung aber auch mit der Innenverzahnung der Abtriebswelle auf einem größeren Durchmesser zwanglos in Eingriff miteinander bringbar sind, ist weiter erfindungsgemäß vorgesehen, dass für eine kollisionsfreie Ausrichtung von genannter Außen- zu der genannten Innenverzahnung vor dem Kuppeln eine Ausrichteinrichtung dient, die nunmehr nicht mehr außenumfangsseitig auf der Abtriebswelle wie im Stand der Technik aufgezeigt, angeordnet ist, sondern vielmehr Teile der Abtriebswelle durchgreift und auf einer Seite für das Zusammenwirken mit der Antriebswelle ein Steuermittel und auf der anderen Seite ein von dem Steuermittel ansteuerbares Ausrichtmittel aufweist, das an der Werkzeugaufnahme festlegbar ist. Dies hat so keine Entsprechung im Stand der Technik, auch unter Einbezug von Werkzeugrevolver- und Werkzeugaufnahme-Lösungen, die zumindest Komponenten der erfindungsgemäßen Kupplungsvorrichtung aufweisen.

Ferner ist von Vorteil, dass auch mit der geänderten neuen Kupplungsvorrichtung es nach wie vor möglich ist, Werkzeugaufnahmen konventioneller Bauart an der neuen Kupplungsvorrichtung festlegen zu können, indem diese eben an der Antriebswelle der Antriebseinheit neben der außenliegenden Außenverzahnung auch noch nach wie vor eine innenliegende Innenverzahnung aufweist, die mit einer konventionellen Außenverzahnung einer Abtriebswelle der Abtriebseinheit der Werkzeugaufnahme koppelbar ist. Dergestalt ist ein weitgehend modulares Werkzeugscheibenkonzept für einen Werkzeugrevolver einer Werkzeugmaschine realisiert, bei dem sich neue und alte Werkzeugaufnahmen je nach Anwendungsfall festlegen lassen.

Weitere vorteilhafte Ausführungsformen der erfindungsgemäßen Lösung sind Gegenstand der sonstigen Unteransprüche.

Im Folgenden wird die erfindungsgemäße Kupplungsvorrichtung anhand eines Ausführungsbeispiels nach der Zeichnung näher erläutert.

Dabei zeigen in prinzipieller und nicht maßstäblicher Darstellung die
- Fig. 1: teilweise in der Art eines Längsschnittes, teilweise in perspektivischer Ansicht, einen Teil eines Werkzeugrevolvers einer nicht näher dargestellten Werkzeugmaschine mit einem Teil der erfindungsgemäßen Kupplungsvorrichtung;
- Fig. 2: in perspektivischer Ansicht eine Werkzeugaufnahme ohne eingesetztes Bearbeitungswerkzeug mit Teilen einer Kupplungsvorrichtung, wie sie im Stand der Technik nachweisbar ist;
- Fig. 3 und 4: teilweise in der Art eines Längsschnittes, teilweise in perspektivischer Ansicht eine Werkzeugaufnahme ohne Bearbeitungswerkzeug mit Teilen der erfindungsgemäßen Kupplungsvorrichtung im entkuppelten bzw. gekuppelten Zustand;
- Fig. 5 und 6: teilweise in der Art eines Längsschnittes, teilweise in perspektivischer Ansicht für einen Kupplungseingriff das Einsetzen der spindelkopfartigen Werkzeugaufnahme nach der Fig. 2 in einen Werkzeugrevolver nach der Fig. 1 bzw. den vollständig erfolgten Kupplungseingriff zwischen Werkzeugaufnahme und Werkzeugrevolver; und
- Fig. 7 und 8: entsprechende Darstellungen zu den Fig. 5 und 6, diesmal jedoch unter Verwendung einer Werkzeugaufnahme gemäß den Darstellungen nach den Fig. 3 und 4 mit Teilen der erfindungsgemäßen Kupplungsvorrichtung, wobei die Fig. 7 die Werkzeugaufnahme in einem Betriebszustand nach der Fig. 3 zeigt und die Fig. 8 dem gezeigten Betriebszustand der Werkzeugaufnahme nach der Fig. 4 entspricht.

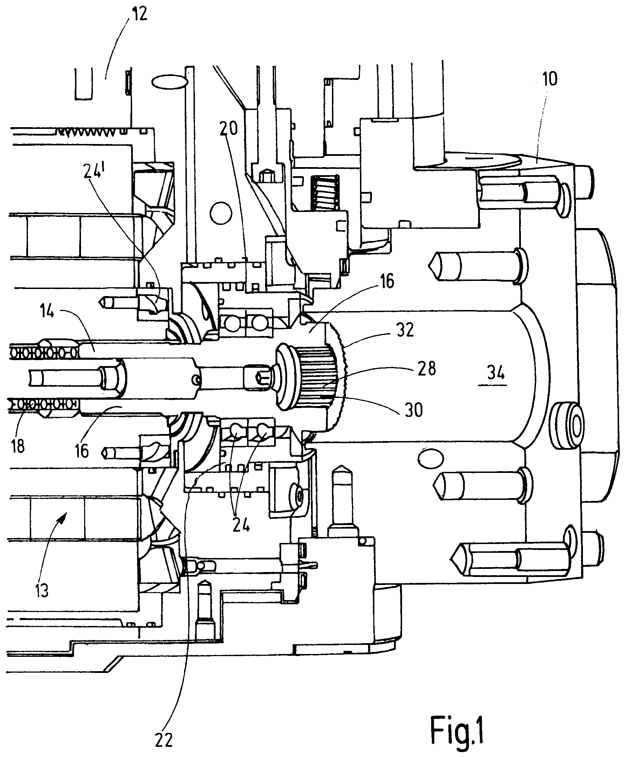

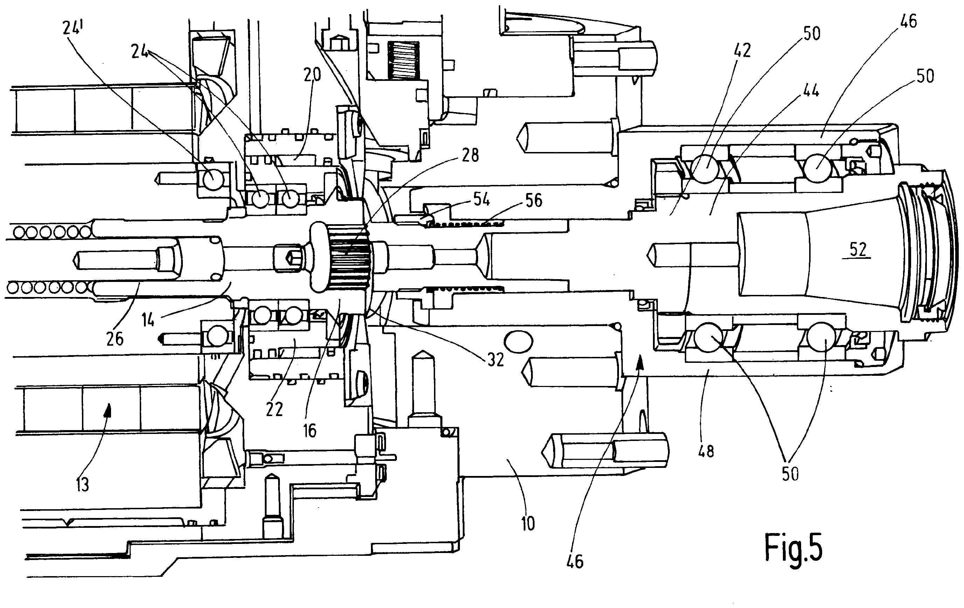

Die Fig. 1 gibt auszugsweise Teile eines sog. Werkzeugrevolvers für eine Werkzeugmaschine (nicht dargestellt) wieder, wobei der Werkzeugrevolver Bestandteil dieser Maschine, beispielsweise in Form einer Fräsmaschine, für eine spanende Werkstückbearbeitung ist. Hierfür ist eine Werkzeugscheibe 10 um stationär angeordnete Gehäuseteile 12 des Werkzeugrevolvers schwenkbar geführt, die bei modernen Direkt-Konzeptantrieben für den Werkzeugrevolver eine Antriebseinheit 13 mit einer Antriebswelle 14 aufnehmen. Die angesprochene Antriebseinheit 13, regelmäßig in Form eines Elektromotors, ist dabei vorzugsweise integraler Bestandteil der stationär angeordneten Gehäuseteile 12 des Werkzeugrevolvers und solche Lösungen sind beispielhaft in der DE 101 30 446 A1, in der DE 10 2009 042 772 A1 oder in der DE 10 2005 033 890 A1 aufgezeigt. Die innerhalb der Gehäuseteile 12 über übliche und daher nicht mehr näher beschriebene Lagerstellen 24, 24' drehbar geführte Antriebswelle 14 ist mehrteilig ausgeführt und weist ein vorderes Eingriffsteil 16 auf, das mittels eines Energiespeichers, wie beispielsweise einer Druckfeder 18, in seine in der Fig. 1 gezeigte vorderste Stellung bringbar ist, sobald eine gegengerichtete hydraulische Krafteinleitung entfällt. Zum Aufbringen der genannten hydraulischen Kraft dient, wie dies beispielhaft die Fig. 5 zeigt, eine hydraulische Ringkammer 20, die mit entsprechendem Hydraulikdruck beaufschlagt dafür Sorge trägt, dass ein hydraulischer Stufenkolben 22 entgegen der Kraftwirkung der Druckfeder 18 in Blickrichtung auf die Figuren gesehen von rechts nach links zurückgestellt wird und dabei seine in der Fig. 5 gezeigte Endlage einnehmen kann. Der zylindrische Stufenkolben 22 nimmt dabei unter Mitführung der beiden vorderen Lagerstellen 24 das vordere Eingriffsteil 16 der Antriebswelle 14 mit zurück, wobei hierfür das Eingriffsteil 16 in einer axial ausgerichteten Längsführung 26 längsverfahrbar in den sonstigen Teilen der Antriebswelle 14 geführt ist.

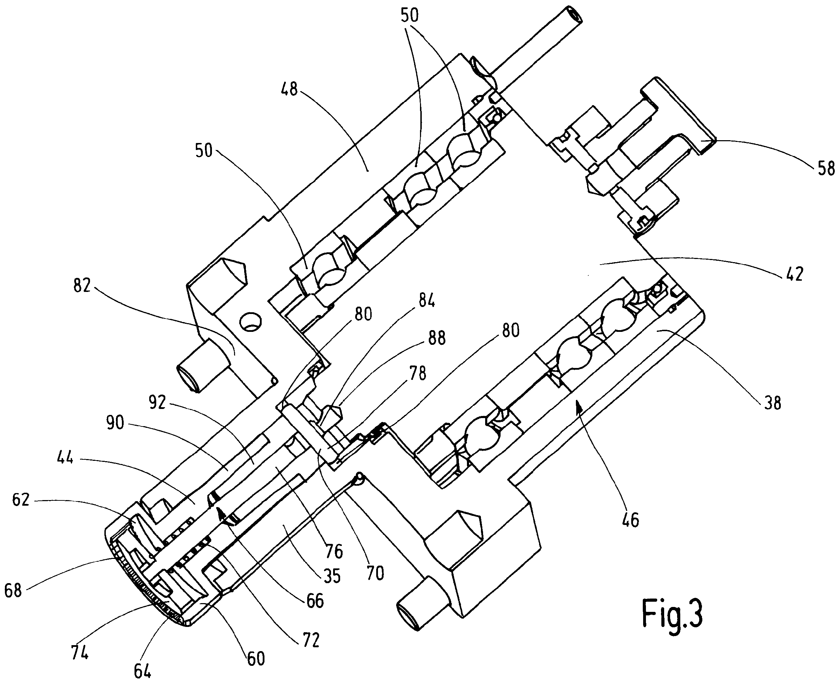

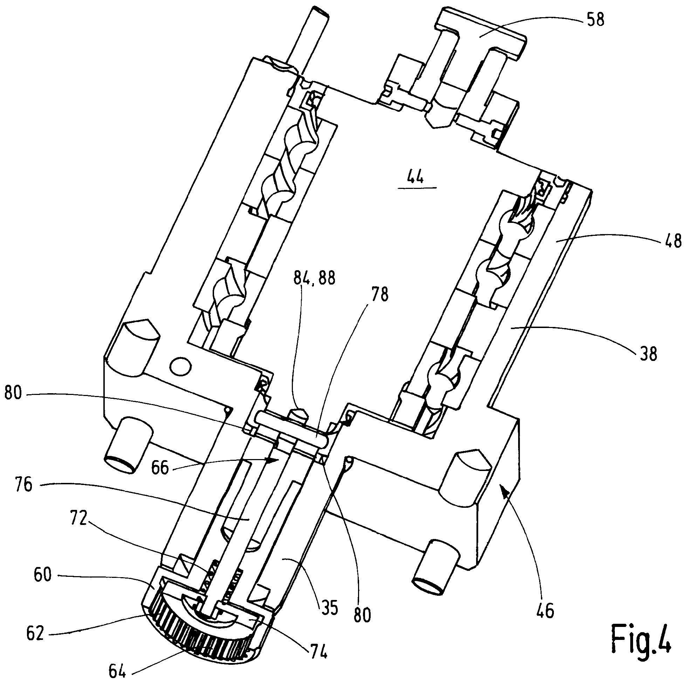

Wie sich des Weiteren aus der Fig. 1 ergibt, weist das Eingriffsteil 16 an seinem freien vorderen Ende eine Innenverzahnung 28 auf, die in einer mittig angeordneten, zylindrischen Innenvertiefung 30 im Eingriffsteil 16 eingebracht ist. Des Weiteren weist das Eingriffsteil 16 auf seiner zylindrischen Außenumfangsseite eine weitere Verzahnung in Form einer Außenverzahnung 32 auf. Die Außenverzahnung 32 liegt dabei auf einem deutlich größeren Durchmesser als der Durchmesser, der durch die Innenverzahnung 28 gebildet ist. Des Weiteren ist in der Werkzeugscheibe 10 eine zylindrische Mittenausnehmung 34 vorhanden, die der Aufnahme entsprechend zylindrisch ausgebildeter Festlegezapfen 35 von Werkzeugaufnahmen 36, 38 dient, wobei die Werkzeugaufnahme 36 konventioneller Natur ist, und die neu gestalteten Werkzeugaufnahmen 38 nach den Figuren 3 und 4 sind mit Teilen der erfindungsgemäßen Kupplungsvorrichtung ausgestattet. Anstelle der angesprochenen zylindrischen Ausbildung von Mittenausnehmung 34 und Festlegezapfen 35 können die dahingehend in Eingriff miteinander bringbaren Komponenten auch zumindest in Teilen konisch ausgebildet sein (nicht dargestellt). Der einfacheren Darstellung wegen wurde in den Figuren das spanende Bearbeitungswerkzeug weggelassen, das in üblicher und daher nicht mehr näher beschriebener Weise sich an der jeweiligen Werkzeugaufnahme 36, 38 festlegen lässt. Des Weiteren ist in der Fig. 1 das Eingriffsteil 16 in seiner vordersten Endstellung gezeigt, bei entleerter respektive drucklos gehaltener hydraulischer Ringkammer 20 und teilentspannter Druckfeder 18 als dem hydraulischen Energiespeicher. In dieser vorderen Eingriffsstellung blockiert das Eingriffsteil 16 das freie Verschwenken der Werkzeugscheibe 10 um eine Hochachse, die quer zur Längsachse der Antriebswelle 14 verläuft. In diesem vorderen Eingriffszustand ist die Werkzeugscheibe 10 in ihrer Schwenkbewegung über das Eingriffsteil 16 jedenfalls blockiert und kann über dieses nicht weggeschwenkt werden, wobei für das definitive und präzise Festlegen der Werkzeugscheibe 10 in Bearbeitungspositionen in üblicher Weise ein weiterer motorischer Antrieb mit einer bekannten Verriegelungseinrichtung dient, die beide der Einfachheit halber nicht dargestellt sind.

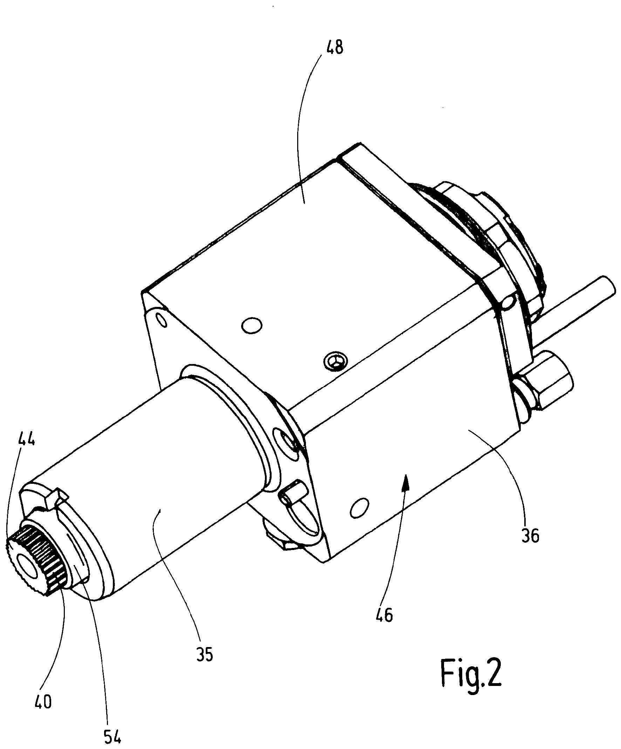

Die bekannte Werkzeugaufnahme nach der Fig. 2 weist an ihrem zylindrischen Festlegezapfen 35 eine nach außen vorspringende Außenverzahnung 40 auf, die in Eingriff bringbar ist mit der Innenverzahnung 28 der Antriebswelle 14. Wie insbesondere die Fig. 5 zeigt, weist die Werkzeugaufnahme 36 auf ihrer Innenseite eine Art Spindeltrieb 42 auf mit einer Abtriebswelle 44 der Abtriebseinheit 46 für den Drehantrieb des nicht näher dargestellten Bearbeitungswerkzeuges, wobei die Abtriebseinheit 46 über ein Spindelgehäuse 48 verfügt, indem in üblicher Weise über Lagerstellen 50 die Abtriebswelle 44 geführt ist. Der Spindeltrieb 42 respektive die Abtriebswelle 44 ist gestuft ausgebildet und weist an ihrer rechten freien Stirnseite einen Aufnahmekonus 52 für das Festlegen des nicht dargestellten Bearbeitungswerkzeuges auf. In Blickrichtung auf die Fig. 5 gesehen ist auf der linken Seite eine hülsenförmige Verdrehsicherung 54 angeordnet, die als Ausricht- oder Indexiereinrichtung um eine vorgebbare Wegstrecke entlang eines Außenumfanges der Abtriebswelle 44 verfahrbar geführt ist und sich dabei mit ihrem freien rechten stirnseitigen Ende an einem weiteren Energiespeicher in Form einer weiteren Druckfeder 56 abstützt, die die Tendenz hat, die hülsenförmige Verdrehsicherung 54 in Blickrichtung auf die Fig. 5 gesehen nach links zu drücken. In dieser linken Anschlagstellung verrastet die Verdrehsicherung 54 die Abtriebswelle 44 in einer vorgegebenen radialen Position, so dass immer sichergestellt ist, dass die Außenverzahnung 40 kollisionsfrei in Eingriff kommt mit der Innenverzahnung 28 des Eingriffsteiles 16 der Antriebswelle 14. Eine solche hier zum Einsatz kommende Verdrehsicherung als Indexiereinrichtung ist beispielhaft in der DE 42 28 946 A1 aufgezeigt, so dass an dieser Stelle auf die konstruktiven Einzelheiten nicht mehr näher eingegangen wird.

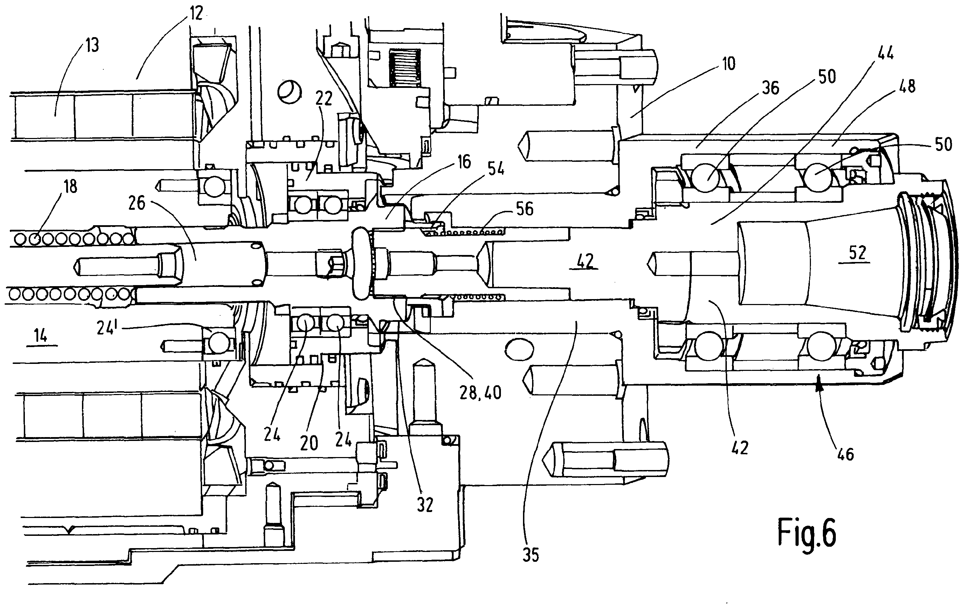

Ist gemäß der Darstellung nach der Fig. 6 die bekannte Werkzeugaufnahme 36 vollständig an der Werkzeugscheibe 10 festgelegt, wird die hydraulische Ringkammer 20 entspannt und unter der Federwirkung der Druckfeder 18 das Eingriffsteil 16 nach vorne geschoben, wobei die mittels der Verdrehsicherung 54, die insoweit als Ausrichteinrichtung dient, die aufeinander ausgerichteten Verzahnungen 28 und 40 kollisionsfrei in Eingriff miteinander kommen, wobei über das freie stirnseitige Ende des Eingriffsteils 16 die Verdrehsicherung 54 entgegen der Kraft der Druckfeder 56 zurückgeschoben wird, worauf der verriegelnde Eingriff unterbleibt und die Abtriebswelle 44 wird für den Antrieb des Spindeltriebes 42 freigegeben. Dabei übergreift die zylindrische Innenvertiefung 30 mit ihrer Innenverzahnung 28 teilweise die Abtriebswelle 44 mit ihrer Außenverzahnung 40 an deren freiem Ende, so dass die benachbarten freien Stirnseiten von Eingriffsteil 16 und hülsenartige Verdrehsicherung 54 in flächige Anlage miteinander kommen. Durch Ansteuern des Elektromotors als Antriebseinheit 13 wird dann über die derart gekuppelte Verbindung zwischen Antriebswelle 14 und Abtriebswelle 44 das spanende Bearbeitungswerkzeug angetrieben.

Für einen Entkupplungsvorgang, wie dies in der Fig. 5 beispielhaft wiedergegeben ist, wird dann die hydraulische Ringkammer 20 wiederum mit Druck beaufschlagt, wobei der Stufenkolben 22 in Blickrichtung auf die Fig. 5 gesehen von rechts nach links zurückfährt und dabei über die beiden vorderen Lagerstellen 24 das Eingriffsteil 16 entgegen der Wirkung der Druckfeder 18 mitnimmt. Bei zurückgezogenem Eingriffsteil 16 kann dann wiederum die Werkzeugscheibe 10 in üblicher Weise verschwenkt werden, und eine andere Werkzeugaufnahme (nicht dargestellt), die am Außenumfang der Werkzeugscheibe 10 angeordnet ist, kommt in die vorgesehene Bearbeitungsstellung nach der Fig. 5 für einen erneuten Kupplungsvorgang. Sobald das Eingriffsteil 16 in seine zurückgezogene Stellung verfährt, schiebt die Druckfeder 56 die Verdrehsicherung 54 als Ausrichteinrichtung wieder in Blickrichtung von rechts nach links vor und verriegelt die Abtriebswelle 44 sicher in ihrer momentanen Position, so dass bei einem erneuten Ineingriffbringen von Innenverzahnung 28 mit Außenverzahnung 40 die Zähne so aufeinander ausgerichtet sind, dass die angesprochenen Verzahnungen miteinander kämmen können. Die dahingehend aufgezeigte Lösung ist Stand der Technik, wobei mit der erfindungsgemäßen Kupplungsvorrichtung sich wie vorstehend dargelegt nach wie vor auch Werkzeugaufnahmen 36 konventioneller Bauart für einen Bearbeitungsvorgang einkuppeln lassen. Sollte dies jedoch nicht gewünscht sein, muss auf der Antriebsseite bei der Antriebswelle 14 die angesprochene Innenverzahnung 28 entfallen oder man verzichtet einfach auf dahingehende Kupplungsvorgänge mit den bekannten Werkzeugaufnahmen 36.

Im Folgenden wird nunmehr die erfindungsgemäße Werkzeugaufnahme 38 anhand der Figuren 3 und 4 näher erläutert, wobei die Fig. 3 die Werkzeugaufnahme 38 im entkuppelten Zustand und die Fig. 4 im gekuppelten Zustand zeigt. Sofern die Werkzeugaufnahme 38 Übereinstimmungen mit der bekannten Werkzeugaufnahme 36 nach der Fig. 2 aufweist, werden für dieselben Bauteile dieselben Bezugszeichen verwendet, und die insoweit hierzu getroffenen Ausführungen gelten dann auch für die neue Ausführungsform 38 entsprechend. So weist auch die Werkzeugaufnahme 38 ein Spindelgehäuse 48 auf, in dem über nunmehr drei Lagerstellen 50 drehbar ein gestufter Spindeltrieb 42 in Form der Abtriebswelle 44 geführt ist. Die insoweit gebildete Abtriebseinheit 46 weist in Blickrichtung auf die Figuren 3 und 4 gesehen an ihrem oberen Ende eine Anschlussstelle 58 auf, über die ein nicht näher dargestelltes Aufnahmeteil für das spanende Bearbeitungswerkzeug anschließbar und an der Werkzeugaufnahme 38 koppelbar ist. Am gegenüberliegenden unteren Ende geht, wie bereits ausgeführt, das Spindelgehäuse 48 in einen zylindrischen Festlegezapfen 35 über, an dessen freiem unteren Ende die gestufte Abtriebswelle 44 ins Freie tritt. Das untere freie Ende der Abtriebswelle 44 erweitert sich in ein hülsenförmiges Anschlussteil 60, das mittig eine zylindrische Ausnehmung 62 aufweist, entlang der eine Innenverzahnung 64 der Abtriebswelle 44 geführt ist. Alle hier zum Einsatz kommenden Verzahnungen 28, 32, 40 und 64 sind bevorzugt als Keilverzahnungen ausgeführt. Der Außenumfang des genannten Anschlussteiles 60 schließt dabei im Wesentlichen bündig mit dem Außenumfang des Festlegezapfens 35 ab.

Auch die neuere Werkzeugaufnahmelösung 38 weist für eine kollisionsfreie Ausrichtung nunmehr von Außenverzahnung 40 der Antriebswelle 14 zu Innenverzahnung 64 der Abtriebswelle 44 vor dem eigentlichen Kuppelvorgang eine Ausrichteinrichtung 66 auf, die gemäß der Darstellung nach den Figuren 3 und 4 Teile der Abtriebswelle 44 durchgreift und auf der einen Seite ein Steuermittel 68 und auf der anderen Seite ein von dem Steuermittel 68 ansteuerbares Ausrichtmittel 70 aufweist, das an Gehäuseteilen des Spindelgehäuses 48 stationär festlegbar ist, was im Folgenden noch näher erläutert werden wird. Unter der Einwirkung eines weiteren Energiespeichers in Form einer Druckfeder 72 weist das Steuermittel 68 der neuen Ausrichteinrichtung 66 einen axialen Überstand gegenüber den Teilen der Werkzeugaufnahme 38 auf, insbesondere in Form des freien Endes des Festlegezapfens 35. Bei der gezeigten Ausführungsform ist das Steuermittel 68 aus einer Steuerscheibe 74 gebildet, die mit einem radialen Abstand zu der Innenverzahnung 64 der Abtriebswelle 44 axial verfahrbar innerhalb der mittigen Ausnehmung 62 geführt ist. Das Steuermittel 68 respektive die Steuerscheibe 74 ist fest mit einem Stangenteil 76 verbunden, wobei das Stangenteil an seinem anderen freien Ende quer verlaufend von einem Eingriffsbolzen 78 durchgriffen ist, der als Ausrichtmittel für die Abtriebswelle 44 gemäß der Darstellung nach der Fig. 3 im entkuppelten Zustand in taschen- oder nutförmigen Ausnehmungen 80 auf der Innenseite des Festlegezapfens 35 gehalten ist, und zwar an der Stelle des Überganges des Festlegezapfens 35 zu der freien Stirnseite 82 des sonstigen Spindelgehäuses 48.

Des Weiteren weist das Stangenteil 76 an seinem freien Ende, das benachbart zu dem Eingriffsbolzen 78 angeordnet ist, eine stangenartige Zentriereinrichtung 84 auf, die im gekuppelten Zustand gemäß der Darstellung nach der Fig. 4 in Eingriff ist mit korrespondierenden Teilen der Abtriebswelle 44 in Form einer konisch zulaufenden Führungsausnehmung 88. Zur Bildung der Führung für das Stangenteil 76 ist das Anschlussteil 60 mit der Innenverzahnung 64 über einen zylindrischen Fortsatz 90 mit einem korrespondierend ausgebildeten Mittenfortsatz 92 der Abtriebswelle 44 fest verbunden, beispielsweise können die beiden Fortsätze 90, 92 miteinander verschraubt sein. Da der Eingriffsbolzen 78 als Ausrichtmittel 70 auch den Mittenfortsatz 92 der Abtriebswelle 44 und mithin auch die Abtriebswelle 44 selbst durchgreift, ist diese Abtriebswelle 44 in ihrer jeweiligen Position festgelegt, sobald der Eingriffsbolzen 78 durch Eingriff in die quer verlaufenden Ausnehmungen 80 im Spindelgehäuse 48 festgelegt ist. Das Anschlussteil 60 mit der Innenverzahnung 64 kann dann nicht mehr verdreht werden, sondern behält seine in der Fig. 3 gezeigte Stellung im entkuppelten Zustand der Werkzeugaufnahme 38 bei.

Wird jedoch im gekuppelten Zustand der Werkzeugaufnahme 38 die Steuerscheibe 74 betätigt, was im Folgenden noch näher erläutert werden wird, wird diese gemäß der Darstellung nach der Fig. 4 entgegen der Druckfeder 72 in die zylindrische Ausnehmung 62 weiter hineinverschoben, und über das Stangenteil 76 gelangt der Eingriffsbolzen 78 außer Eingriff mit den Ausnehmungen 80 im Spindelgehäuse 48 mit der Folge, dass über die Innenverzahnung 64 der Abtriebswelle 44, die insoweit dann auch freigegeben ist, eine Drehbewegung für den Antrieb des nicht näher dargestellten Bearbeitungswerkzeuges erfolgen kann. Für eine sichere Zentrierung des Stangenteils 76 greift dann ihr freies Ende in Form des Zentrierteiles 84 in die Führungsaufnehmung 88 in der Abtriebswelle 44 ein. Kommt es ausgehend vom gekuppelten Zustand nach der Fig. 4 erneut zum Entkuppeln, nimmt die Ausrichteinrichtung 66 als Ganzes wieder ihre in der Fig. 3 gezeigte Position ein, und über den festgelegten Eingriffsbolzen 78 als Ausrichtmittel 70 ist die Abtriebswelle 44 dann erneut drehfest im Spindelgehäuse 48 arretiert.

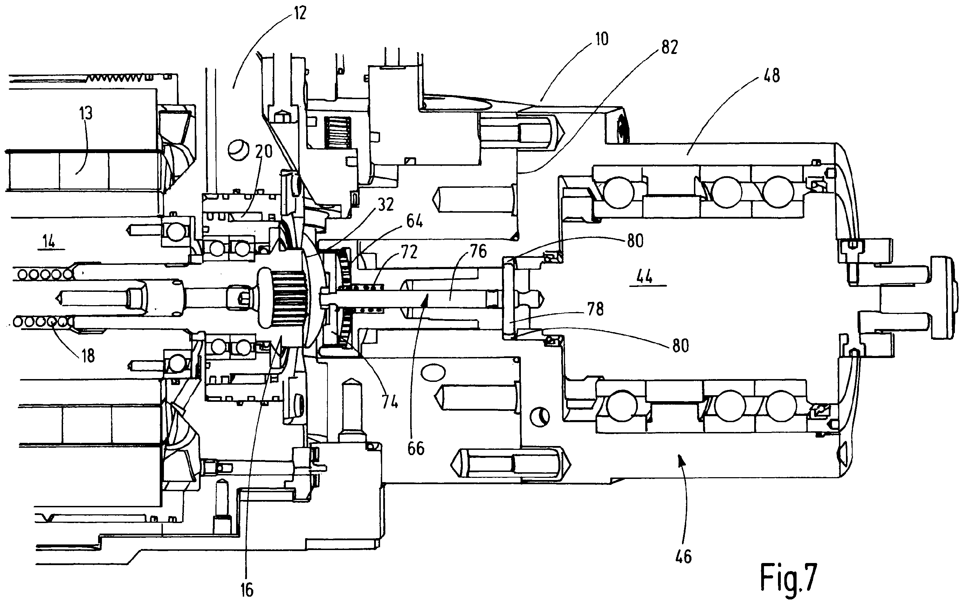

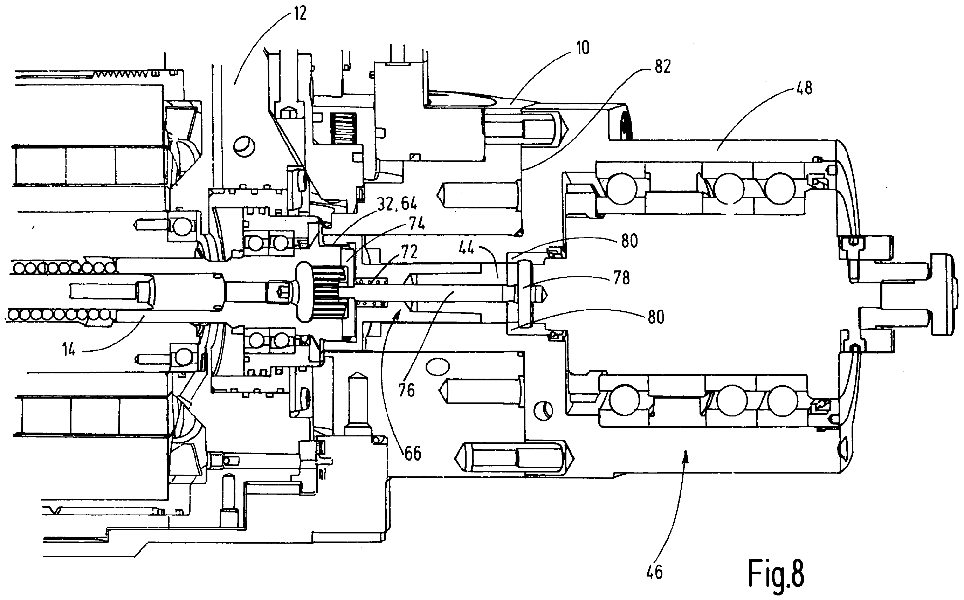

Die Figuren 7 und 8 zeigen nun entsprechend den bereits vorgestellten Lösungen nach den Figuren 5 und 6 die neue Werkzeugaufnahme 38 in einer entkuppelten Stellung an der Werkzeugscheibe 10 bzw. in einer gekuppelten Stellung. Dabei ist die Werkzeugaufnahme 38 nach der Fig. 3 in dieser Betätigungsstellung gemäß der Darstellung nach der Fig. 7 in der Werkzeugscheibe 10 aufgenommen, und die Aufnahme 38 im gekuppelten Zustand nach der Fig. 4 zeigt die zugehörige Aufnahmeposition nach der Fig. 8. Um von der ausgekuppelten oder entkuppelten Stellung nach der Fig. 7 in die gekuppelte Stellung nach der Fig. 8 zu gelangen, wird wiederum die hydraulische Ringkammer 20 druckentleert, und unter der Wirkung der Druckfeder 18 gelangt in bereits beschriebener Weise das Eingriffsteil 16 von seiner hinteren Stellung nach der Fig. 7 in seine vordere Stellung nach der Fig. 8. Dabei kommt die Außenverzahnung 32 der Antriebswelle 14 in Eingriff mit der Innenverzahnung 64 der Abtriebswelle 44 in kuppelnden Eingriff, wobei die vordere freie Stirnseite des Eingriffsteiles 16 an der vorderen Stirnseite der Steuerscheibe 74 angreift und diese in Blickrichtung auf die Fig. 7 gesehen von links nach rechts zurückschiebt, und zwar so lange, bis der quer verlaufende Eingriffsbolzen 78 der erfindungsgemäßen Ausrichteinrichtung 66 außer Eingriff kommt mit den taschenartigen Ausnehmungen 80 im Spindelgehäuse 48. Dergestalt ist dann die Abtriebswelle 44 freigegeben, um sich mittels der eingekuppelten Antriebswelle 14 über den Elektromotor 13 antreiben zu lassen.

Der dahingehend vollgekuppelte Zustand ist in Fig. 8 exemplarisch dargestellt, und ein Entkupplungsvorgang läuft wiederum wie für die Lösung nach den Figuren 5 und 6 bereits beschrieben in umgekehrter Reihenfolge derart ab, dass durch Beaufschlagen der hydraulischen Ringkammer 20 mit Druck der Stufenkolben 22 entgegen der Federwirkung der Druckfeder 18 zurückverfährt mit der Folge, dass die beiden in Eingriff befindlichen Außenverzahnungen 32 von Antriebswelle 14 und Innenverzahnungen 64 von Abtriebswelle 44 wiederum außer Eingriff kommen mit der Folge, dass das Ausrichtmittel 70 der Ausrichteinrichtung 66 in Form des Eingriffsbolzens 78 in den korrespondierenden Ausnehmungen 80 im Spindelgehäuse 48 erneut festgelegt wird. Dergestalt ist die Abtriebswelle 44 dann genau in einer Position festgelegt, mit der sichergestellt wird, dass bei einem erneuten Ineingriffbringen der genannten Verzahnung die Zähne der einen Verzahnung kollisionsfrei und passgenau in die Zahnabstände der jeweils anderen Verzahnungen eingreifen können.

Sobald die Ausrichteinrichtungen 54, 66 im entkuppelten Zustand für die Werkzeugaufnahmen 36 bzw. 38 entsprechend entriegelt sind, werden sie über die jeweilige Abtriebswelle 44 drehend bis zum Ende der Bearbeitung mitgenommen.

Während sich bei Lösungen nach dem Stand der Technik, wie in den Figuren 2, 5 und 6 gezeigt, bei einer zehnprozentigen Einschaltdauer sich Drehmomente zwischen Antriebswelle 14 und Abtriebswelle 44 von etwa 55 Nm übertragen lassen, ermöglicht die neue Verzahnungslösung mit verbreiterten Durchmessereingriffen eine Drehmomentübertragung von 85 Nm und mehr. Dies ermöglicht letztendlich den Einsatz leistungsstärkerer Direktantriebe im Werkzeugrevolver, weil die angesprochene Welle-Nabe-Verbindungen zwischen den korrespondierenden Verzahnungen auf einem größeren Durchmesser höhere Übertraungsmomente zulassen. Insbesondere ist sichergestellt, dass es nicht mehr zu einem mechanischen Versagen bei der Drehmomentübertragung an den Verzahnungseingriffen kommen kann.

## Patentansprüche

1. Werkzeugrevolver mit einer Antriebseinheit (13), einer eine Abtriebseinheit (46) aufweisenden Werkzeugaufnahme (36, 38), in der ein Bearbeitungswerkzeug aufnehmbar ist, und einer Kupplungsvorrichtung zum wieder lösbaren Herstellen einer Antriebsverbindung zwischen der Antriebseinheit (13) und der Abtriebseinheit (46), wobei eine Antriebswelle (14) der Antriebseinheit (13) in einer Kupplungsstellung mit ihrer Außenverzahnung (32) in Eingriff mit einer Innenverzahnung (64) einer Abtriebswelle (44) der Abtriebseinheit (46) ist, **dadurch gekennzeichnet, dass** für eine kollisionsfreie Ausrichtung von Außen- (32) zu Innenverzahnung (64) vor dem Kuppeln eine Ausrichteinrichtung (66) dient, die Teile der Abtriebswelle (44) durchgreift und auf einer Seite für das Zusammenwirken mit der Antriebswelle (14) ein Steuermittel (68) und auf der anderen Seite ein von dem Steuermittel (68) ansteuerbares Ausrichtmittel (70) aufweist, das an der Werkzeugaufnahme (38) festlegbar ist.

2. Werkzeugrevolver nach Anspruch 1, **dadurch gekennzeichnet, dass** die Außenverzahnung (32) der Antriebswelle (14) eine Innenverzahnung (28) derselben Antriebswelle (14) umfasst, die stirnseitig an der Antriebswelle (14) angeordnet ins Freie austritt und im gekuppelten Zustand der Aufnahme einer Außenverzahnung (40) einer Abtriebswelle (44) einer zweiten Werkzeugaufnahme (36) dient, die mit einer bekannten Ausrichteinrichtung (54) die Abtriebswelle (44) der Werkzeugaufnahme (36) umfasst.

3. Werkzeugrevolver nach Anspruch 1 oder 2, **dadurch gekennzeichnet, dass** die Antriebswelle (14) der Antriebseinheit (13) drehbar in einer Aufnahme (22) gelagert ist und zusammen mit dieser mittels Betätigungsmitteln (18, 20) axial verfahrbar von einer Kupplungsstellung in eine Entkupplungsstellung und umgekehrt bringbar ist.

4. Werkzeugrevolver nach einem der vorstehenden Ansprüche, **dadurch gekennzeichnet, dass** unter der Einwirkung eines Energiespeichers (72) das Steuermittel (68) der Ausrichteinrichtung (66) in seiner Neutralstellung einen axialen Überstand gegenüber Teilen (35) der Werkzeugaufnahme (38) aufweist und das Ausrichtmittel (70) an der Werkzeugaufnahme (38) festgelegt ist und dass in der Kupplungsstellung das Steuermittel (68) in Anlage mit der Antriebswelle (14) und das Ausrichtmittel (70) außer Eingriff mit der Werkzeugaufnahme (38) ist.

5. Werkzeugrevolver nach Anspruch 4, **dadurch gekennzeichnet, dass** die Ausrichteinrichtung (66) ein Stangenteil (76) aufweist, das Teile der Abtriebswelle (44) durchgreift und an seiner einen Seite als Steuermittel (68) eine Steuerscheibe (74) und an seinem anderen Ende als Ausrichtmittel (70) einen Eingriffsbolzen (78) aufweist, der mit dem Stangenteil (76) verbunden ist und in taschen- oder nutförmigen Ausnehmungen (80) in Wandteilen der Werkzeugaufnahme (38) in ausgerichteter Stellung festlegbar ist.

6. Werkzeugrevolver nach einem der vorstehenden Ansprüche, **dadurch gekennzeichnet, dass** das Stangenteil (76) an seinem einen freien Ende benachbart zu dem Eingriffsbolzen (78) eine Zentriereinrichtung (84) aufweist, die zumindest in der Kupplungsstellung in Eingriff ist mit Teilen der Abtriebswelle (44) der Werkzeugaufnahme (38).

7. Werkzeugrevolver nach einem der Ansprüche 3 bis 6, **dadurch gekennzeichnet, dass** die Aufnahme (22) der Antriebswelle (14) unter hydraulischer Krafteinleitung in eine entkuppelte Stellung rückgestellt und unter der Wirkung des Energiespeichers (18) bei Wegfall der hydraulischen Krafteinleitung in die Kupplungsstellung vorgestellt ist.

8. Werkzeugrevolver nach einem der vorstehenden Ansprüche, **dadurch gekennzeichnet, dass** das Steuermittel (68) in jeder seiner möglichen axialen Verfahrstellungen von der Innenverzahnung (64) der Abtriebswelle (44) umfasst ist.

9. Werkzeugrevolver nach einem der Ansprüche 4 bis 8, **dadurch gekennzeichnet, dass** der Energiespeicher für das Steuermittel (68) als Druckfeder (72) ausgebildet in einer Aufnahme der Abtriebswelle (44) geführt ist und sich mit seiner einen freien Seite am Steuermittel (68) permanent abstützt.

10. Werkzeugrevolver nach einem der vorstehenden Ansprüche, **dadurch gekennzeichnet, dass** sich an der Werkzeugscheibe (10) des Revolvers Werkzeugaufnahmen einer ersten Bauart (38) und einer zweiten Bauart (36) festlegen lassen, die auf ihrer Abtriebswelle (44) einer Abtriebseinheit (46) eine Innenverzahnung (64) aufweisen, die in Eingriff bringbar ist mit einer zuordenbaren Außenverzahnung (32) der Antriebswelle (14) der Antriebseinheit (13) des Werkzeugrevolvers.

11. Werkzeugrevolver nach Anspruch 10, **dadurch gekennzeichnet, dass** die Werkzeugaufnahme der ersten Bauart (38) eine Abtriebseinheit (46) mit einer Abtriebswelle (44) aufweist, die an ihrem einen freien Ende eine Innenverzahnung (64) aufweist und die zumindest teilweise von einer Ausrichteinrichtung (66) durchgriffen ist.

## Claims

1. Tool turret having a drive unit (13), a tool holder (36, 38) comprising a driven unit (46), in which tool holder a machining tool can be held, and a coupling device for releasably establishing a drive connection between the drive unit (13) and the driven unit (46), wherein, in a coupling position, a drive shaft (14) of the drive unit (13) is engaged by way of its external toothing (32) with an internal toothing (64) of a driven shaft (44) of the driven unit (46), **characterised in that** for collision-free alignment of the external toothing (32) with respect to the internal toothing (64), before coupling, an alignment device (66) is used, which passes through parts of the driven shaft (44) and has a control means (68) on one side for cooperation with the drive shaft (14) and an alignment means (70) that is controllable by the control means (68) on the other side, said alignment means being securable to the tool holder (38).

2. Tool turret according to claim 1, **characterised in that** the external toothing (32) of the drive shaft (14) comprises an internal toothing (28) of the same drive shaft (14) which, arranged on the end face of the driven shaft (14), emerges into the open and, in the coupled state of the holder, is used to hold an external toothing (40) of a driven shaft (44) of a second tool holder (36) which, with a known alignment device (54), comprises the driven shaft (44) of the tool holder (36).

3. Tool turret according to claim 1 or 2, **characterised in that** the drive shaft (14) of the drive unit (13) is rotatably mounted in a holder (22) and can be moved axially with the latter by means of actuating means (18, 20) bringing it from a coupling position to a decoupling position and vice versa.

4. Tool turret according to one of the preceding claims, **characterised in that**, under the action of an energy accumulator (72), the control means (68) of the alignment device (66) has, in its neutral position, an axial overhang with respect to parts (35) of the tool holder (38) and the alignment means (70) is secured to the tool holder (38) and **in that**, in the coupling position, the control means (68) is in contact with the drive shaft (14) and the alignment means (70) is disengaged from the tool holder (38).

5. Tool turret according to claim 4, **characterised in that** the alignment device (66) comprises a rod member (76) which passes through parts of the driven shaft (44) and has on its one side a control disc (74) as control means (68) and on its other end an engagement bolt (78) as alignment means (70), said engagement bolt being connected to the rod member (76) and it being possible in the aligned position to secure it in pocket- or groove-shaped recesses (80) in wall parts of the tool holder (38).

6. Tool turret according to one of the preceding claims, **characterised in that** the rod member (76) has at its one free end, adjacent to the engagement bolt (78), a centring device (84) which, at least in the coupling position, is engaged with parts of the driven shaft (44) of the tool holder (38).

7. Tool turret according to one of claims 3 to 6, **characterised in that** the holder (22) of the drive shaft (14) is returned to a disengaged position under the application of hydraulic force and is advanced to the coupling position under the action of the energy accumulator (18) when the application of hydraulic force ceases.

8. Tool turret according to one of the preceding claims, **characterised in that** the control means (68) is encompassed by the internal toothing (64) of the driven shaft (44) in each of its possible axial travel positions.

9. Tool turret according to one of claims 4 to 8, **characterised in that** the energy accumulator for the control means (68) is configured as a compression spring (72) guided in a holder of the driven shaft (44) and is permanently supported with its one free side on the control means (68).

10. Tool turret according to one of the preceding claims, **characterised in that** tool holders of a first design (38) and of a second design (36) can be secured to the tool disc (10) of the turret, which tool holders have on their driven shaft (44) of a driven unit (46) an internal toothing (64) which can be brought into engagement with an assignable external toothing (32) of the drive shaft (14) of the drive unit (13) of the tool turret.

11. Tool turret according to claim 10, **characterised in that** the tool holder of the first design (38) comprises a driven unit (46) with a driven shaft (44) which has an internal toothing (64) at its one free end and which is at least partially penetrated by an alignment device (66).

## Revendications

1. Revolver à outil comprenant une unité (13) menante, un logement (36, 38) d'outil, qui a une unité (46) menée et dans lequel un outil d'usinage peut être reçu, et un dispositif d'accouplement pour ménager, d'une manière qui peut être redéfaite, une liaison d'entraînement entre l'unité (13) menante et l'unité (46) menée, dans lequel un arbre (14) menant de l'unité (13) menante est, dans une position d'accouplement, par sa denture (32) extérieure, en prise avec une denture (64) intérieure d'un arbre (44) mené de l'unité (46) menée, **caractérisé en ce que** sert à une orientation sans collision de la denture (32) extérieure par rapport à la denture (64) intérieure, avant l'accouplement, un dispositif (66) d'orientation, qui traverse des parties de l'arbre (44) mené et qui a, d'une part, pour la coopération avec l'arbre (14) menant, un moyen (68) de commande et, d'autre part, un moyen (70) d'orientation, qui peut être commandé par le moyen (68) de commande et qui peut être fixé au logement (38) d'outil.

2. Revolver à outil suivant la revendication 1, **caractérisé en ce que** la denture (32) extérieure de l'arbre (14) menant comprend une denture (28) intérieure du même arbre (14) menant, qui, disposée du côté frontal de l'arbre (14) menant, sort à l'air libre et, dans l'état accouplé, sert à la réception d'une denture (40) extérieure d'un arbre (44) mené d'un deuxième logement (36) d'outil, qui comprend, avec un dispositif (54) d'orientation connu, l'arbre (44) mené du logement (36) d'outil.

3. Revolver à outil suivant la revendication 1 ou 2, **caractérisé en ce que** l'arbre (14) menant de l'unité (13) menante est monté tournant dans un logement (22) et, ensemble avec celui-ci, au moyen de moyens (18, 20) d'actionnement, peut être déplacé axialement d'une position d'accouplement à une position de désaccouplement et inversement.

4. Revolver à outil suivant l'une des revendications précédentes, **caractérisé en ce que**, sous l'effet d'un accumulateur (72) d'énergie, le moyen (68) de commande du dispositif (66) d'orientation a, dans sa position neutre, un dépassement axial par rapport à des parties (35) du logement (38) d'outil, et le moyen (70) d'orientation est fixé au logement (38) d'outil, et **en ce que**, dans la position d'accouplement, le moyen (68) de commande est en contact avec l'arbre (14) menant et le moyen (70) d'orientation est hors de prise avec le logement (38) d'outil.

5. Revolver à outil suivant la revendication 4, **caractérisé en ce que** le dispositif (66) d'orientation a une partie (76) en barre, qui traverse des parties de l'arbre (44) mené, et qui a, sur l'un de ses côtés, comme moyen (68) de commande, un disque (74) de commande et, à son autre extrémité, comme moyen (70) d'orientation, un axe (78) de pénétration, qui est relié à la partie (76) en barre, et qui peut, en position orientée, être fixé dans des évidements (80) en forme de poche ou de rainure des parties de paroi du logement (38) d'outil.

6. Revolver à outil suivant l'une des revendications précédentes, **caractérisé en ce que** la partie (76) en barre a, à l'une de ses extrémités libres au voisinage de l'axe (78) de pénétration, un dispositif (84) de centrage, qui, au moins dans la position d'accouplement, est en prise avec des parties de l'arbre (44) mené du logement (38) d'outil.

7. Revolver à outil suivant l'une des revendications 3 à 6, **caractérisé en ce que** le logement (22) de l'arbre (14) menant est rappelé dans une position de désaccouplement par application d'une force hydraulique, et sous l'effet de l'accumulateur (18) d'énergie, lorsque la force hydraulique ne s'applique pas, est mis dans la position d'accouplement.

8. Revolver à outil suivant l'une des revendications précédentes, **caractérisé en ce que** le moyen (68) de commande est entouré, dans chacune de ses positions de déplacement axiales possibles, de la denture (64) intérieure de l'arbre (44) mené.

9. Revolver à outil suivant l'une des revendications 4 à 8, **caractérisé en ce que** l'accumulateur d'énergie du moyen (68) de commande, constitué sous la forme d'un ressort (72) de compression, est guidé dans un logement de l'arbre (44) mené et s'appuie en permanence par son un côté libre sur le moyen (68) de commande.

10. Revolver à outil suivant l'une des revendications précédentes, **caractérisé en ce que** des logements d'outil d'un premier type (38) de construction et d'un deuxième type (36) de construction peuvent être fixés sur le disque (10) d'outil du revolver et ont, sur leur arbre (44) mené d'une unité (46) menée, une denture (64) intérieure, qui peut être mise en prise avec une denture (32) extérieure pouvant être associée de l'arbre (14) menant de l'unité (13) menante du revolver à outil.

11. Revolver à outil suivant la revendication 10, **caractérisé en ce que** le logement d'outil du premier type (38) de construction a une unité (46) menée ayant un arbre (44) mené, qui a, à sa une extrémité libre, une denture (64) intérieure, et qui est traversé au moins en partie par un dispositif (66) d'orientation.
